# EUROPEAN PATENT APPLICATION

(11) **EP 3 689 432 A1**
(43) Date of publication of application: **05.08.2020**
(21) Application number: 18900578.8
(22) Date of filing: 21.12.2018
(51) Int. Cl.: B01B 1/02, B01D 5/00, B01D 53/00, D01F 13/00

(54) **COOLING SYSTEM AND SEPARATION METHOD**

(71) Applicant: Mitsui Chemicals, Inc., Minato-ku Tokyo 105-7122 (JP)
(72) Inventor: YOKOYAMA, Tetsuya, egaura-shi, Chiba 2990265 (JP); MITHARA, Koutarou, egaurMinami-ku, Nafoya, Aichi 4578522 (JP); HATTORI, Takahisa, Yok kaichi-shi, Mie 5128501 (JP)
(74) Representative: Hoffmann Eitle
(86) International application number: PCT/JP2018/047369
(87) International publication number: WO 2020/129255

(57) **Abstract**

Provided is a cooling system, including: a production unit configured to produce a nonwoven fabric by melt-kneading polymers and spinning the melt-kneaded polymers; a discharger configured to discharge a gas containing an organic compound generated during melt-kneading of the polymers; a first heat exchanger configured to cool the gas discharged from the discharger; a second heat exchanger configured to cool the gas discharged from the first heat exchanger, the second heat exchanger being disposed downstream of the first heat exchanger; and an exhaust unit configured to exhaust the gas, discharged from the second heat exchanger, out of the system.

## Description

### Technical Field

The present disclosure relates to a cooling system and a separation method.

### Background Art

Nonwoven fabrics, which have an excellent gas permeability and flexibility, are now widely used in various applications. Nonwoven fabrics are typically used in, for example, absorbent articles such as paper diapers and sanitary napkins, and base fabrics for hygiene masks, medical gauzes, and compresses.

Known methods of producing nonwoven fabrics include melt-kneading a resin composition containing polymers such as propylene-based polymers in an extruder and spinning the melt-kneaded resin composition to form a nonwoven fabric (for example, see Patent Document 1).

### Prior Art Document

### Patent Document

Patent Document 1: Japanese Patent Application Laid-Open (JP-A) No. 2000-96414.

### SUMMARY OF INVENTION

### Problems to Be Solved by the Invention

When polymers as nonwoven fabric materials are melt-kneaded, a gas containing an organic compound may be generated through decomposition of some of the nonwoven fabric materials, or decomposition or volatilization of an additive added during the melt-kneading. As an environmental measure, it is required that the organic compound is separated and removed from the gas containing them before the gas is exhausted out of the system. An example of methods of separating and removing the organic compound include supplying the gas containing the organic compound generated during the production of the nonwoven fabric to a heat exchanger; cooling the gas in the heat exchanger to solidify or liquefy the organic compound; and separating and removing them.

However, when the organic compound in the gas is separated and removed through solidification or liquefaction with a heat exchanger, the organic compound solidified by cooling may adhere to the inside of the heat exchanger, for example, to a fin, to clog the heat exchanger. In order to prevent clogging of the heat exchanger due to an excessive decrease in heat exchange temperature, the heat exchanger is required to be operated with the amount of the refrigerant such as cooling water supplied to the heat exchanger reduced. This can cause insufficient separation and removal of the organic compound in the heat exchanger, and exhausting of a gas from which the organic compound have not been sufficiently removed out of the system.

In view of the above, an object of the present invention is to provide a cooling system in which clogging in a heat exchanger can be reduced, and which can efficiently separate and remove an organic compound in a gas discharged from a production unit configured to produce a nonwoven fabric, and a separation method using the cooling system.

### Means for Solving the Problems

Specific means for addressing the above problem include the following aspects.
<1> A cooling system, comprising: a production unit configured to produce a nonwoven fabric by melt-kneading polymers and spinning the melt-kneaded polymers; a discharger configured to discharge a gas containing an organic compound generated during melt-kneading of the polymers; a first heat exchanger configured to cool the gas discharged from the discharger; a second heat exchanger configured to cool the gas discharged from the first heat exchanger, the second heat exchanger being disposed downstream of the first heat exchanger; and an exhaust unit configured to exhaust the gas, discharged from the second heat exchanger, outward from the system.
<2> The cooling system according to <1>, wherein the first heat exchanger is a fin-tube heat exchanger.
<3> The cooling system according to <1> or <2>, wherein the second heat exchanger is a cross-flow heat exchanger.
<4> The cooling system according to any one of <1> to <3>, further comprising: a path connecting a downstream side of the first heat exchanger with an upstream side of the second heat exchanger and connecting a downstream side of the second heat exchanger with the exhaust unit; a bypass path connecting the upstream side and the downstream side of the second heat exchanger in the path; and a switching unit configured to switch whether the gas discharged from the first heat exchanger is supplied to the second heat exchanger or not.
<5> The cooling system according to any one of <1> to <4>, wherein the organic compound includes at least one selected from 2,4-dimethyl-heptene, 2,6-dimethylnonane, a propylene tetramer, a propylene pentamer, isomers thereof, diacetylbenzene or di-tert-butylphenol.
<6> The cooling system according to any one of <1> to <5>, further comprising a controller configured to control the first heat exchanger such that the first heat exchanger cools the gas discharged from the discharger to a temperature of from more than 30°C to 50°C.
<7> The cooling system according to <6>, wherein the controller controls the second heat exchanger such that the second heat exchanger cools the gas discharged from the first heat exchanger to a temperature of from 20°C to 30°C.
<8> The cooling system according to any one of <1> to <7>, further comprising a first discharge path for discharging a component separated from the gas by the cooling, in the first heat exchanger, of the gas discharged from the discharger.
<9> The cooling system according to any one of <1> to <8>, further comprising a second discharge path for discharging a component separated from the gas by the cooling, in the second heat exchanger, of the gas discharged from the first heat exchanger.
<10> A method of separating an organic compound from gas containing the organic compound using the cooling system according to any one of <1> to <9>.
<11> The method according to <10>, wherein the organic compound includes at least one selected from 2,4-dimethyl-heptene, 2,6-dimethylnonane, a propylene tetramer, a propylene pentamer, isomers thereof, diacetylbenzene or di-tert-butylphenol.
<12> The method according to <10> or <11>, wherein: the second heat exchanger is a cross-flow heat exchanger, and the method comprises: in the second heat exchanger, cooling the gas discharged from the first heat exchanger; allowing at least one of the organic compound contained in the gas to adhere to a gas flow path of the second heat exchanger; and separating the at least one organic compound contained in the gas from the gas.
<13> The method according to <12>, wherein: the cooling system further comprises a second discharge path for discharging a component separated from the gas by cooling, in the second heat exchanger, of the gas discharged from the first heat exchanger, and the method further comprises: stopping cooling of the gas in the second heat exchanger; then, supplying the gas discharged from the first heat exchanger to the second heat exchanger; allowing the at least one organic compound adhering to the gas flow path of the second heat exchanger to be melted; and discharging the melted at least one organic compound via the second discharge path.
<14> The method according to <12>, wherein: the cooling system further comprises a second discharge path for discharging a component separated from the gas by cooling, in the second heat exchanger, of the gas discharged from the first heat exchanger; and the method comprises: stopping cooling of the gas in the first heat exchanger and cooling of the gas in the second heat exchanger; then, supplying the gas discharged from the first heat exchanger to the second heat exchanger; allowing the at least one organic compound adhering to the gas flow path of the second heat exchanger to be melted; and discharging the melted at least one organic compound via the second discharge path.

### Effect of the Invention

The present disclosure can provide a cooling system in which clogging in heat exchangers can be reduced, and which can efficiently separate and remove an organic compound in a gas discharged from a production unit configured to produce a nonwoven fabric, and a separation method using the cooling system.

### BRIEF DESCRIPTION OF DRAWINGS

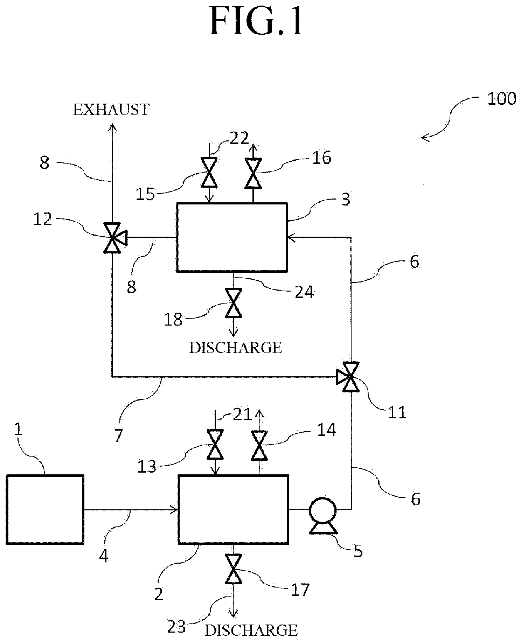

FIG. 1 is a schematic diagram illustrating a cooling system according to one embodiment of the invention.

### DESCRIPTION OF EMBODIMENTS

Embodiments of the invention will now be described in detail. However, the invention is not limited to the following embodiments in any way and can be carried out with any modifications as appropriate without departing from the objects of the invention.

As used herein, any numerical value range indicated by the term "to" represents any range including the numerical values described before and after the term "to" as the lower limit value and the upper limit value, respectively.

For numerical value ranges described stepwise herein, the upper limit value or the lower limit value of one numerical value range may be replaced with the upper limit value or the lower limit value of the other stepwise described numerical value range. The upper limit value or the lower limit value of any numerical value range described herein may also be replaced with that described in Examples.

### [Cooling System]

The cooling system of the present disclosure includes:
a production unit configured to produce a nonwoven fabric by melt-kneading polymers and spinning the melt-kneaded polymers;
a discharger configured to discharge a gas containing an organic compound generated during melt-kneading of the polymers;
a first heat exchanger configured to cool the gas discharged from the discharger;
a second heat exchanger configured to cool the gas discharged from the first heat exchanger, the second heat exchanger being disposed downstream of the first heat exchanger; and
an exhaust unit configured to exhaust the gas, discharged from the second heat exchanger, outward from the system.

When polymers as nonwoven fabric materials are melt-kneaded, a gas containing an organic compound may be generated through decomposition of some of the nonwoven fabric materials, or decomposition or volatilization of an additive added during the melt-kneading. As an environmental measure, it is required that the organic compound is separated and removed from the gas containing them before the gas is exhausted out of the system. An example of methods of separating and removing the organic compound include supplying the gas containing the organic compound generated during the production of the nonwoven fabric to a heat exchanger; cooling the gas in the heat exchanger to solidify or liquefy the organic compound; and separating and removing them.

However, when the organic compound in the gas is separated and removed through solidification or liquefaction with a heat exchanger, the organic compound solidified by cooling may adhere to the inside of the heat exchanger, for example, to a fin, to clog the heat exchanger. In order to prevent clogging of the heat exchanger due to an excessive decrease in heat exchange temperature, the heat exchanger is required to be operated with the amount of the refrigerant such as cooling water supplied to the heat exchanger reduced. This can cause insufficient separation and removal of the organic compound in the heat exchanger, and exhausting of a gas from which the organic compound have not been sufficiently removed out of the system.

On the other hand, the cooling system of the present disclosure supplies a gas containing an organic compound generated during melt-kneading of polymers to a first heat exchanger and a second heat exchanger in the order, and exhausts the gas discharged from the second heat exchanger out of the system. Since the cooling system of the present disclosure separates and removes the organic compound using at least two heat exchangers, the system can exhaust a gas from which the organic compound is sufficiently separated and removed out of the system, while reducing clogging of fins due to the cooled and solidified organic compound.

An example of the cooling system of the present disclosure will be described using FIG. 1. FIG. 1 is a schematic diagram illustrating a cooling system according to one embodiment of the invention.

As shown in FIG. 1, the cooling system (100) includes: a production unit (1) configured to produce a nonwoven fabric by melt-kneading polymers and spinning the melt-kneaded polymers; a first heat exchanger (2) configured to cool the gas containing an organic compound generated during melt-kneading of the polymers; and a second heat exchanger (3) configured to cool the gas discharged from the first heat exchanger (2).

The production unit (1) is required to produce a nonwoven fabric by melt-kneading polymers and spinning the melt-kneaded polymers. Examples include spunbonded nonwoven fabric production apparatuses configured to produce nonwoven fabrics by spunbonding and meltblown nonwoven fabric production apparatuses configured to produce nonwoven fabrics by meltblowing.

Examples of the spunbonded nonwoven fabric production apparatuses include known production apparatuses configured to form spunbonded nonwoven fabrics. The spunbonded nonwoven fabric production apparatuses may include, for example, an extruder configured to melt-knead a resin composition; a spinning unit including a plurality of spinning nozzles for discharging the melt-kneaded resin composition; a cooling unit configured to cool long fibers obtained by spinning the resin composition; a drawing unit configured to draw the cooled long fibers; a conveying and collecting unit configured to deposit the drawn long fibers to form a nonwoven web; and an entangling unit configured to heat and press the nonwoven web.

Examples of the meltblown nonwoven fabric production apparatus include known production apparatuses configured to form meltblown nonwoven fabrics. The meltblown nonwoven fabric production apparatuses may include, for example, an extruder configured to melt-knead a resin composition; a spinning unit including a plurality of spinning nozzles for discharging the melt-kneaded resin composition with a hot gas; and a conveying and collecting unit configured to deposit fibers obtained by spinning the resin composition.

The organic compound is not particularly limited as long as it is a compound generated during melt-kneading of polymers, and include an organic compound generated by decomposition of some of nonwoven fabric materials, and an organic compound generated by, for example, decomposition or volatilization of an additive added during melt-kneading.

The organic compound may be multimers generated by decomposition of some of polymers such as propylene-based polymers as nonwoven fabric materials, including 2,4-dimethyl-heptene, 2,6-dimethylnonane, a propylene tetramer, a propylene pentamer, and isomers thereof.

Examples of the organic compound also include, other than the above compounds, diacetylbenzene, di-tert-butylphenol, fatty acids such as palmitic acid and stearic acid, fatty acid amides such as erucic acid amide, dihydroxydiisopropylbenzene, C₁₁H₁₄O₂, isomers thereof, and denaturated products thereof.

The organic compound may be one kind or two kinds or more.

The gas containing the organic compound discharged from the production unit (1) may further contain an organic compound generated other than during melt-kneading of polymers.

The gas containing the organic compound discharged from the production unit (1) is discharged to a flow path (4) via the discharger and supplied to the first heat exchanger (2) through the flow path (4). The temperature of the gas containing the organic compound discharged from the production unit (1) is not particularly limited and may be, for example, from 50°C to 100°C, from 60°C to 80°C, or from 70°C to 80°C.

The first heat exchanger (2) is a unit configured to cool the gas containing the organic compound supplied through the flow path (4) and configured to separate and remove at least some of the organic compound in the gas.

The first heat exchanger (2) is supplied with cooling water through a cooling water supply path (21) and performs heat exchange between the cooling water and the gas containing the organic compound to cool the gas. The cooling water supply paths (21) are provided with open/close valves (13) and (14). It is noted that refrigerants for cooling the gas containing the organic compound are not limited to water, and any refrigerants may be used.

The first heat exchanger (2) may control the flow rate of the cooling water passing through the cooling water supply paths (21) to control cooling of the gas containing the organic compound. The first heat exchanger (2) may cool the gas containing the organic compound to, for example, a temperature from more than 30°C to 50°C. In this case, the cooling system (100) may include a controller configured to control cooling of the gas containing the organic compound. For example, the controller may control the flow rate or the like of the cooling water supplied to the first heat exchanger (2) such that the gas containing the organic compound is cooled to a temperature from more than 30°C to 50°C.

Alternatively, the first heat exchanger (2) may cool the gas containing the organic compound to, for example, a temperature from more than 30°C to 40°C. In this case, the controller may control the flow rate or the like of the cooling water supplied to the first heat exchanger (2) such that the gas containing the organic compound is cooled to a temperature from more than 30°C to 40°C.

The first heat exchanger (2) is any known heat exchanger without limitation, and examples include fin-tube heat exchangers, plate-fin heat exchanger, double-pipe heat exchanger, parallel-flow heat exchanger, counter-flow heat exchanger, and cross-flow heat exchanger. Preferably, the first heat exchanger (2) is a fin-tube heat exchanger from the viewpoint that it can process higher flow rate of the gas containing the organic compound. The fin-tube heat exchanger is a heat exchanger which has a radiator tube with spirally wound fins (strip metal plates) around the outer periphery in order to increase the heat radiation area, in which a refrigerant for cooling a gas is supplied to cool the gas supplied to the outer surface side of the radiator tube.

The cooling system (100) is provided with a first discharge path (23) for discharging a component separated from the gas containing the organic compound by cooling of the gas in the first heat exchanger (2). The first discharge path (23) is provided with an open/close valve (17), which can be opened to discharge a component separated from the gas containing the organic compound.

For example, from the first discharge path (23), diacetylbenzene, C₁₁H₁₄O₂, and di-tert-butylphenol which can be contained in the gas containing the organic compound can be satisfactorily discharged.

The gas cooled in the first heat exchanger (2) is discharged to a flow path (6). The flow path (6) is a path for connecting the downstream side of the first heat exchanger (2) and the upstream side of the second heat exchanger (3). A pump (5) provided with the flow path (6) is driven, the upstream side and the downstream side of the flow path (6) of a three-way valve (11) (switching unit) are opened, and the side of a bypass path (7) of the three-way valve (11), which is a path for connecting the upstream side and the downstream side of the second heat exchanger (3), is closed, such that the gas cooled in the first heat exchanger (2) is supplied to the second heat exchanger (3) through the flow path (6).

On the other hand, the pump (5) is driven, the downstream side of the flow path (6) of the three-way valve (11) is closed, and the upstream side of the flow path (6) and the side of the bypass path (7) of the three-way valve (11) are opened, such that the gas cooled in the first heat exchanger (2) is supplied to the bypass path (7). Opening and closing of the three-way valve (11) can be adjusted to switch whether the gas discharged from the first heat exchanger (2) is supplied to the second heat exchanger (3) or not.

The second heat exchanger (3) is a unit configured to cool the gas supplied through the flow path (6) and configured to separate and remove the organic compound in the gas.

The second heat exchanger (3) is supplied with cooling water through a cooling water supply path (22) and performs heat exchange between the cooling water and the gas to cool the gas. The cooling water supply paths (22) are provided with open/close valves (15) and (16). It is noted that refrigerants for cooling the gas are not limited to water, and any refrigerants may be used. It is also noted that the cooling water supply path (22) at the downstream side of the second heat exchanger (3) may be connected to the cooling water supply path (21) and supply cooling water discharged from the second heat exchanger (3) to the first heat exchanger (2) through the cooling water supply path (21).

The second heat exchanger (3) may control the flow rate of the cooling water passing through the cooling water supply paths (22) to control cooling of the gas. The second heat exchanger (3) may cool the gas to, for example, a temperature from 20°C to 30°C. In this case, the cooling system (100) may include a controller configured to control cooling of the gas. The controller may control the flow rate or the like of the cooling water supplied to the second heat exchanger (3) such that the gas is cooled to a temperature from 20°C to 30°C.

Alternatively, the second heat exchanger (3) may cool the gas to, for example, a temperature from 20°C to 25°C. In this case, the controller may control the flow rate or the like of the cooling water supplied to the second heat exchanger (3) such that the gas is cooled to a temperature from 20°C to 25°C.

The second heat exchanger (3) is any known heat exchanger without limitation, and examples include fin-tube heat exchangers, plate-fin heat exchanger, double-pipe heat exchanger, parallel-flow heat exchanger, counter-flow heat exchanger, and cross-flow heat exchanger. Preferably, the second heat exchanger (3) is a cross-flow heat exchanger from the viewpoint that clogging in the first heat exchanger (2) can be suitably prevented, and that the organic compound in the gas can be suitably separated and removed. For example, the cross-flow heat exchanger is a heat exchanger having a plurality of radiator tubes supplied with a refrigerant for cooling a gas, and in which the gas supplied to the outer surface sides of the radiator tubes from the direction orthogonal to the direction of the axes of the radiator tubes is cooled. The radiator tubes in the cross-flow heat exchanger may be spiral flow paths.

The cooling system (100) includes a second discharge path (24) for discharging a component separated from the gas by cooling, in the second heat exchanger (3), of the gas discharged from the first heat exchanger (2). The second discharge path (24) is provided with an open/close valve (18), which can be opened to discharge a component separated from the gas.

For example, from the second discharge path (24), diacetylbenzene, C₁₁H₁₄O₂, and di-tert-butylphenol can be suitably discharged.

The gas cooled in the second heat exchanger (3) is discharged to a flow path (8). The upstream side and the downstream side of the flow path (8) of a three-way valve (12) are opened, and the side of the bypass path (7) of the three-way valve (12) is closed, such that the gas cooled in the second heat exchanger (3) is exhausted via the exhaust unit through the flow path (8).

On the other hand, when the gas discharged from the first heat exchanger (2) is not supplied to the second heat exchanger (3), the upstream side of the flow path (8) of the three-way valve (12) is closed, and the side of the bypass path (7) and the downstream side of the flow path (8) of the three-way valve (12) are opened, such that the gas supplied to the bypass path (7) is exhausted via the an exhaust unit through the flow path (8).

### [Separation Method]

The separation method of the present disclosure is a method of using the cooling system of the present disclosure to separate an organic compound from the gas containing the organic compound. By way of an example of the separation method of the present disclosure, a method using the cooling system (100) will be described below.

Preferably, the separation method of the present disclosure includes: cooling the gas discharged from the first heat exchanger (2) in the second heat exchanger (3); following at least one of the organic compound contained in the gas to adhere to the gas flow path of the second heat exchanger (3); and separating the at least one organic compound from the gas. In this case, the second heat exchanger (3) is preferably a cross-flow heat exchanger from the viewpoint that a large quantity of the organic compound can be allowed to adhere to the gas flow path and separated from the gas while clogging of the second heat exchanger (3) can be prevented.

The separation method of the present disclosure may also include melting the organic compound adhering to the gas flow path of the second heat exchanger (3).

For example, the open/close valve (15) may be closed to stop supply of cooling water to the second heat exchanger (3) and stop cooling of the gas in the second heat exchanger (3), before the gas discharged from the first heat exchanger (2) may be supplied to the second heat exchanger (3). This enables melting of the organic compound adhering to the gas flow path of the second heat exchanger (3) and discharging of the melt organic compound via the second discharge path (24).

Alternatively, the open/close valve (13) may be closed to stop supply of cooling water to the first heat exchanger (2), and the open/close valve (15) may be closed to stop supply of cooling water to the second heat exchanger (3) and stop cooling of the gas in the first heat exchanger (2) and cooling of the gas in the second heat exchanger (3), before the gas discharged from the first heat exchanger (2) may be supplied to the second heat exchanger (3). This enables melting of the organic compound adhering to the gas flow path of the second heat exchanger (3) and discharging of the melt organic compound via the second discharge path (24). Furthermore, this enables melting of an organic compound which have higher melting points and adhere to the gas flow path, and removing them from the gas flow path, as compared with the case in which only cooling of the gas in the second heat exchanger (3) is stopped.

When the open/close valve (15) is closed to stop supply of cooling water to the second heat exchanger (3) and cooling of the gas in the second heat exchanger (3), the organic compound in the gas supplied to the second heat exchanger (3) is probably not removed and is discharged from the second heat exchanger (3). In this case, the cooling system (100) may also be configured to recover the gas to be exhausted out of the system via an exhaust unit. In this configuration, the flow path (8) may be further provided with another path, the gas discharged from the second heat exchanger (3) may be supplied to the other path, and the gas may be recovered or processed.

### EXAMPLES

The invention will be described in more detail below with reference to Examples. However, the invention is not limited to the following Examples without departing from the spirit and scope of the invention.

### [Example 1]

Organic compounds were separated from a gas containing the organic compounds, generated during melt-kneading of propylene-based polymers as nonwoven fabric materials, using a cooling system shown in FIG. 1 with heat exchangers described below and under conditions described below.

### (First Heat Exchanger and Second Heat Exchanger)

First heat exchanger: a fin-tube heat exchanger

Second heat exchanger: a vertical multitubular heat exchanger (produced by Maeda Iron Works Co., Ltd.; tube: TURBULENT TUBE (SPIRAL); heating surface area: 6.44 m2; amount of heat exchange: 6.41 kW)
(Conditions of Gas Supply and Temperature of Cooling Water)
the temperature of the gas containing organic compounds: 70°C
the gas flow rate in the cooling system: 25 m³/min (supplied for 1 hour)
the temperature of cooling water supplied to the first heat exchanger: 16°C
the temperature of cooling water supplied to the second heat exchanger: 8°C

When organic compounds were separated from the gas containing the organic compounds under the above conditions for gas supply and the temperature of cooling water, the temperatures of the gases discharged from the first heat exchanger and the second heat exchanger, and the temperatures of the cooling water discharged from the first heat exchanger and the second heat exchanger were as follows:
(Temperatures of Gases and Cooling Water)
the temperature of the gas discharged from the first heat exchanger: 35°C
the temperature of the gas discharged from the second heat exchanger: 25°C
the temperature of the cooling water discharged from the first heat exchanger: 22°C
the temperature of the cooling water discharged from the first heat exchanger: 10°C

Next, component analyses were carried out for liquid organic compounds condensed in and collected from the gas flow path of the first heat exchanger, solid organic compounds adhering to the gas flow path of the second heat exchanger, and liquid organic compounds condensed in and collected from the gas flow path of the second heat exchanger, using a gas chromatograph-mass spectrometer (produced by Agilent Technologies, Inc., product name: GC-MS HP-6973). Table 1 and Table 2 below show components estimated from peaks and percent peak areas thereof, respectively. Table 1 shows results of analysis for the organic compounds separated from the first heat exchanger, while Table 2 shows results of analysis for the organic compounds separated from the second heat exchanger.

**[Table 1]**

| Peak No. | Retention Time (min) | Estimated Compounds | Percent Peak Area |
|---|---|---|---|
| 1 | 14.90 | diacetylbenzene | 57 |
| 2 | 15.26 | dihydroxydiisopropylbenzene | 2.2 |
| 3 | 15.47 | C₁₁H₁₄O₂ (molecular weight 178) | 33 |
| 4 | 15.82 | di-tert-butylphenol | 5.1 |
| 5 | 18.75 | hydrocarbon | 0.4 |
| 6 | 20.82 | palmitic acid | 1.8 |
| 7 | 22.72 | stearic acid | 0.4 |
| 8 | 25.55 | erucic acid amide denatured product (molecular weight 319) | 0.05 |
| 9 | 27.70 | erucic acid amide | 0.1 |

**[Table 2]**

| Peak No. | Retention Time (min) | Estimated Compounds | Percent Peak Area of Solid Organic Compounds | Percent Peak Area of Liquid Organic Compounds |
|---|---|---|---|---|
| 1 | 14.81 | diacetylbenzene | 13 | 73 |
| 2 | 15.36 | C₁₁H₁₄O₂ (molecular weight 178) | 8.2 | 22 |
| 3 | 15.70 | di-tert-butylphenol | 2.3 | 4.8 |
| 4 | 20.73 | palmitic acid | 6.8 | 0.2 |
| 5 | 22.67 | stearic acid | 38 | 0.1 |
| 6 | 27.63 | erucic acid amide | 32 | 0.3 |

As shown in Tables 1 and 2, the organic compounds can be separated from the gas containing the organic compounds by using the cooling system in this Example.

### [Comparative Example 1]

The same system as the cooling system in Example 1 was used, except that the system did not include the second heat exchanger as a heat exchanger and only include the first heat exchanger.

Using the cooling systems in Example 1 and Comparative Example 1 and under the above conditions, organic compounds were separated from the gas containing the organic compounds. Then, a part of the gas discharged out of the system was recovered, and diacetylbenzene which may be contained in the discharged gas was collected in a collection tube (silica gel) and a collection tube (TENAX) and the amounts were compared.

The results are shown in Table 3.

**[Table 3]**

| | Collection Tube (silica gel) (µg/L) | Collection Tube (TENAX) (µg/L) |
|---|---|---|
| Example 1 | Less than lower limit value of quantification | 39 |
| Comparative Example 1 | 16 | 51.9 |

As shown in Table 3, the amount of diacetylbenzene which may be contained in the discharged gas in Example 1 was reduced as compared with that in Comparative Example 1 regardless of the type of the collection tube, which demonstrates that the cooling system allows for satisfactory removing of diacetylbenzene.

### DESCRIPTION OF SYMBOLS

- 1:: production unit;
- 2:: first heat exchanger;
- 3:: second heat exchanger;
- 4, 6, and 8:: flow path;
- 5:: pump;
- 7:: bypass path;
- 11 and 12:: three-way valve (switching unit);
- 13 to 18:: open/close valve;
- 21 and 22:: cooling water flow path;
- 23:: first discharge path;
- 24:: second discharge path

## Claims

1. A cooling system, comprising:
a production unit configured to produce a nonwoven fabric by melt-kneading polymers and spinning the melt-kneaded polymers;
a discharger configured to discharge a gas containing an organic compound generated during melt-kneading of the polymers;
a first heat exchanger configured to cool the gas discharged from the discharger;
a second heat exchanger configured to cool the gas discharged from the first heat exchanger, the second heat exchanger being disposed downstream of the first heat exchanger; and
an exhaust unit configured to exhaust the gas, discharged from the second heat exchanger, outward from the system.

2. The cooling system according to claim 1, wherein the first heat exchanger is a fin-tube heat exchanger.

3. The cooling system according to claim 1 or 2, wherein the second heat exchanger is a cross-flow heat exchanger.

4. The cooling system according to any one of claims 1 to 3, further comprising:
a path connecting a downstream side of the first heat exchanger with an upstream side of the second heat exchanger and connecting a downstream side of the second heat exchanger with the exhaust unit;
a bypass path connecting the upstream side and the downstream side of the second heat exchanger in the path; and
a switching unit configured to switch whether the gas discharged from the first heat exchanger is supplied to the second heat exchanger or not.

5. The cooling system according to any one of claims 1 to 4, wherein the organic compound includes at least one selected from 2,4-dimethyl-heptene, 2,6-dimethylnonane, a propylene tetramer, a propylene pentamer, isomers thereof, diacetylbenzene or di-tert-butylphenol.

6. The cooling system according to any one of claims 1 to 5, further comprising a controller configured to control the first heat exchanger such that the first heat exchanger cools the gas discharged from the discharger to a temperature of from more than 30°C to 50°C.

7. The cooling system according to claim 6, wherein the controller controls the second heat exchanger such that the second heat exchanger cools the gas discharged from the first heat exchanger to a temperature of from 20°C to 30°C.

8. The cooling system according to any one of claims 1 to 7, further comprising a first discharge path for discharging a component separated from the gas by the cooling, in the first heat exchanger, of the gas discharged from the discharger.

9. The cooling system according to any one of claims 1 to 8, further comprising a second discharge path for discharging a component separated from the gas by the cooling, in the second heat exchanger, of the gas discharged from the first heat exchanger.

10. A method of separating an organic compound from gas containing the organic compound using the cooling system according to any one of claims 1 to 9.

11. The method according to claim 10, wherein the organic compound includes at least one selected from 2,4-dimethyl-heptene, 2,6-dimethylnonane, a propylene tetramer, a propylene pentamer, isomers thereof, diacetylbenzene or di-tert-butylphenol.

12. The method according to claim 10 or 11, wherein:
the second heat exchanger is a cross-flow heat exchanger, and
the method comprises:
in the second heat exchanger, cooling the gas discharged from the first heat exchanger;
allowing at least one of the organic compound contained in the gas to adhere to a gas flow path of the second heat exchanger; and
separating the at least one organic compound contained in the gas from the gas.

13. The method according to claim 12, wherein:
the cooling system further comprises a second discharge path for discharging a component separated from the gas by cooling, in the second heat exchanger, of the gas discharged from the first heat exchanger, and
the method further comprises:
stopping cooling of the gas in the second heat exchanger;
then, supplying the gas discharged from the first heat exchanger to the second heat exchanger;
allowing the at least one organic compound adhering to the gas flow path of the second heat exchanger to be melted; and
discharging the melted at least one organic compound via the second discharge path.

14. The method according to claim 12, wherein:
the cooling system further comprises a second discharge path for discharging a component separated from the gas by cooling, in the second heat exchanger, of the gas discharged from the first heat exchanger; and
the method comprises:
stopping cooling of the gas in the first heat exchanger and cooling of the gas in the second heat exchanger;
then, supplying the gas discharged from the first heat exchanger to the second heat exchanger;
allowing the at least one organic compound adhering to the gas flow path of the second heat exchanger to be melted; and
discharging the melted at least one organic compound via the second discharge path.
